(19) Europäisches Patentamt
European Patent Office
Office européen des brevets

(11) **EP 1 753 158 A1**

(12) **EUROPEAN PATENT APPLICATION**
published in accordance with Art. 158(3) EPC

(43) Date of publication:
**14.02.2007 Bulletin 2007/07**

(51) Int Cl.:
*H04B 10/04* (2006.01)     *H04B 10/06* (2006.01)
*H04B 10/142* (2006.01)     *H04B 10/152* (2006.01)
*H04J 14/00* (2006.01)     *H04J 14/02* (2006.01)
*H04Q 7/36* (2006.01)

(21) Application number: **05720803.5**

(22) Date of filing: **15.03.2005**

(86) International application number:
**PCT/JP2005/004547**

(87) International publication number:
**WO 2006/003744 (12.01.2006 Gazette 2006/02)**

(84) Designated Contracting States:
**DE FR GB**

(30) Priority: **05.07.2004 JP 2004197793**

(71) Applicant: **MATSUSHITA ELECTRIC INDUSTRIAL CO., LTD.**
**Osaka 571-8501 (JP)**

(72) Inventor: **ASANO, Hiroaki**
**c/o Matsushita El.Ind.Co.Ltd.**
**Chuo-ku, Osaka-shi, Osaka 540-6319 (JP)**

(74) Representative: **Grünecker, Kinkeldey,**
**Stockmair & Schwanhäusser**
**Anwaltssozietät**
**Maximilianstrasse 58**
**80538 München (DE)**

(54) **TRANSMISSION DEVICE, RECEPTION DEVICE, SIGNAL TRANSMISSION DEVICE, AND SIGNAL TRANSMISSION METHOD**

(57)     A transmitting device and a receiving device at a low cost that can improve reliability of a communication quality, and a signal transmission apparatus and a signal transmission method therefor are provided.

An RF signal input to a transmitting device is converted into an IF signal, by a frequency converter, employing a first local signal output by a local signal generator. The IF signal is synthesized, by a frequency multiplexer, with a second local signal that is a local signal multiplied at a frequency division ratio 1/n by a frequency demultiplier. The synthesis signal is FM modulated by an FM modulator, and the resultant signal is transmitted to a receiving device. The signal received by the receiving device is demodulated by an FM demodulator, and the demodulated signal is separated, by a frequency separator, into the second local signal and the IF signal. The second local signal is multiplied by a multiple n by a multiplier to obtain the first local signal. The IF signal is converted by a frequency converter employing the first local signal, and the obtained signal is output as an RF signal.

[FIG. 1]

12: FREQUENCY CONVERTER

16: FREQUENCY MULTIPLEXER

17: FM MODULATOR

22: FM DEMODULATOR

23: FREQUENCY SEPARATOR

26: FREQUENCY CONVERTER

27: N DEMULTIPLIER

...

## Description

<Technical Field>

The present invention relates to a transmitting device, a receiving device, and a signal transmission apparatus and a signal transmission method.

<Background Art>

Among conventional mobile communication systems for wherein performing mutual communication of radios signals between a mobile radio terminal and a toll center via a radio base station, there is a mobile communication system wherein frequency modulation (hereinafter referred to FM modulation) and thereafter electrooptic conversion are performed for an upstream signal of a radio frequency to be transmitted from a radio base station to a toll center, and the resultant signal is transmitted to the toll center (see, for example, patent document 1). According to this mobile communication system, since a signal transmitted to an electrooptic conversion circuit has a constant amplitude, non-linear distortion caused during the electrooptic modulation can be reduced.

Then, the radio base station employs the local oscillator and the mixer to perform frequency conversion and FM modulation for the upstream signal having a radio frequency. As a result, when the upstream signal is beyond the input frequency band of the FM modulation circuit, the dynamic range of the electrooptic modulation circuit can be extended. Furthermore, the toll center performs FM demodulation for a signal received from the radio base station, then employs the local oscillator and the mixer to perform frequency conversion for the demodulated signal, and obtains the original frequency.

Patent Document 1: JP5-30020

<Disclosure of the Invention>

<Problems That The Invention Is To Solve>

However, according to the conventional mobile communication system, when the local frequency of a radio base station is shifted from the local frequency of the toll center even slightly, the original frequency of a signal to be transmitted is not completely reproduced, and a signal received from the mobile radio terminal can not be correctly demodulated. Thus, the reliability of the communication quality is deteriorated. Furthermore, since an accurate local oscillator need to be provided for the radio base station and the toll center, the costs would be increased.

While taking these problems into account, one objective of the present invention is to provide a transmitting device and a receiving device at low costs that can improve reliability of a communication quality, and a signal transmission apparatus and a signal transmission method therefor.

<Means For Solving The Problems>

According to a first aspect of the present invention, a transmitting device comprises:

a reference signal generator, for outputting a reference signal having a predetermined frequency;
a frequency converter, for employing the reference signal to convert a signal having a first frequency into a signal having a second frequency;
a frequency demultiplier, for multiplying the reference signal at a predetermined frequency division ratio;
a synthesizer, for synthesizing the signal having the second frequency with the reference signal obtained by the frequency demultiplier; and
a frequency modulator, for performing frequency modulation for the synthesis signal.

With this arrangement, the reference signal used for frequency conversion is divided, the obtained signal is synthesized with a frequency obtained by frequency conversion, and frequency modulation is performed for the synthesized signal. Since the elements of the reference signal can be transmitted to the reception side, the costs can be reduced, and the reliability of a communication quality can be improved.

According to a second aspect of the invention, the transmitting device of the invention further comprises:

an automatic gain controller, for performing automatic gain control for a signal output by the frequency demultiplier, so that a power level of a signal output by the synthesizer is constant.

With this arrangement, since the power level input to the frequency modulator is constant, the stable frequency modulation characteristic can be obtained, and the communication quality can be improved.

According to a third aspect of the invention, for the transmitting device, the frequency division ratio is designated so that the frequency of a signal output by the frequency demultiplier is lower than the second frequency.

With this arrangement, the reference signal obtained by frequency division can be synthesized with the signal having the second frequency, without deteriorating the noise tolerance characteristic.

According to a fourth aspect of the invention, a receiving device comprises:

a receiver, for receiving a signal obtained through a process wherein a signal having a second frequency, into which a signal having a first frequency has been converted by employing a reference signal having a predetermined frequency, is synthesized with a signal that is obtained by multiplying the reference signal at a predetermined frequency division ratio, and frequency modulation is performed for the synthesized signal;

a frequency demodulator, for performing frequency demodulation for the received signal;

a separator, for separating the demodulated signal into a signal having the second frequency and a signal obtained by frequency division;

a multiplier, for multiplying, by a multiple that is a reciprocal of the frequency division ratio, the signal obtained by frequency division; and

a frequency converter for converting the signal having the second frequency into the signal having the first frequency by employing the signal obtained by multiplication.

According to this arrangement, frequency modulation is performed for a demodulated signal, by employing the reference signal for frequency conversion that has been included in the received signal. Thus, reliability on a communication quality can be improved, and since reference signal generation means is not required, the costs can be reduced.

According to a fifth aspect of the invention, a signal transmission apparatus comprises:

a transmitting device including

a reference signal generator, for outputting a first reference signal,

a frequency converter, for employing the first reference signal to convert a signal having a first frequency into a signal having a second frequency,

a frequency demultiplier, for multiplying the first reference signal at a predetermined frequency division ratio,

a synthesizer, for synthesizing the signal having the second frequency with the first reference signal obtained by frequency division, and

a frequency modulator, for performing frequency modulation for the synthesis signal; and

a receiving device including

a receiver, for receiving a signal obtained through a process wherein a signal having a fourth frequency, into which a signal having a third frequency has been converted by employing a second reference signal, is synthesized with a signal that is obtained by multiplying the second reference signal at a predetermined frequency division ratio, and thereafter, frequency modulation is performed for the synthesized signal,

a frequency demodulator, for performing frequency demodulation for the received signal;

a separator, for separating the demodulated signal into the signal having the fourth frequency and the signal obtained by frequency division;

a multiplier, for multiplying, by a multiple that is a reciprocal of the frequency division ratio, the signal obtained by frequency division, and

a frequency converter, for employing the signal obtained by multiplication to convert the signal having the fourth frequency into the signal having the third frequency.

According to this arrangement, the transmitting device divides the reference signal used for frequency conversion, synthesizes the resultant signal with a signal obtained by frequency conversion, and performs frequency modulation for the resultant signal. Therefore, the elements of the reference signal can be transmitted to the reception side. Further, the receiving device performs frequency modulation for a demodulated signal, by employing the reference signal for frequency conversion that is included in the received signal. Thus, the costs can be reduced, and reliability on a communication quality can be improved.

According to a sixth aspect of the invention, a signal transmission apparatus comprises:

a transmitting device including

a reference signal generator, for outputting a first reference signal,

a frequency converter, for employing the first reference signal to convert a signal having a first frequency into a signal having a second frequency,

a frequency demultiplier, for multiplying the first reference signal at a predetermined frequency division ratio,

a synthesizer, for synthesizing the signal having the second frequency with the first reference signal obtained by frequency division, and

a frequency modulator, for performing frequency modulation for the synthesis signal; and

a receiving device including

a receiver, for receiving a signal having a fourth frequency, into which a signal having a third frequency has been converted by employing the first reference signal;

a frequency demodulator, for performing frequency demodulation for the received signal;

a frequency converter, for employing a signal output by the first reference signal generation means of the transmitting device to convert the signal having the fourth frequency into the signal having the third frequency.

According to this arrangement, the transmitting device divides the reference signal used for frequency conversion, synthesizes the resultant signal with a signal obtained by frequency conversion, and performs frequency modulation for the resultant signal. Therefore, the elements of the reference signal can be transmitted to the reception side. Further, the receiving device performs frequency modulation for a demodulated signal, by employing the reference signal generated by the transmitting device. Thus, the costs can be reduced, and reliability on a communication quality can be improved.

According to a seventh aspect of the invention, a signal transmission apparatus comprises:

a receiving device including

a receiver, for receiving a signal obtained through a process wherein a signal having a fourth frequency, into which a signal having a third frequency has been converted by employing a first reference signal having a predetermined frequency, is synthesized with a signal that is obtained by multiplying the first reference signal at a predetermined frequency division ratio, and thereafter, frequency modulation is performed for the synthesized signal,

a frequency demodulator, for performing frequency demodulation for the received signal,

a separator, for separating the demodulated signal into the signal having the fourth frequency and the signal obtained by frequency division,

a multiplier, for multiplying, by a multiple that is a reciprocal of the frequency division ratio, the signal obtained by frequency division, and

a frequency converter, for employing the signal obtained by multiplication to convert the signal having the fourth frequency into the signal having the third signal; and

a transmitting device including

a frequency converter for, based on the signal that is obtained by frequency division and is output by the separator of the receiving device, converting a signal having the first frequency into a signal having the second frequency by employing the signal that is multiplied by a multiple that is a reciprocal of the frequency division ratio, and

a frequency modulator, for performing frequency modulation for the signal having the second frequency.

According to this arrangement, the receiving device converts the frequency of the demodulated signal, by employing the reference signal for frequency conversion that is included in the received signal, while the transmitting device divides the reference signal used by the receiving device, and converts the frequency of the resultant signal. Therefore, the costs can be reduced, and the reliability of a communication quality can be improved.

According to an eighth aspect of the invention, a toll center, which performs communication with a terminal device via a radio base station that is capable of communicating with the terminal device, comprises:

a signal transmission apparatus of the fifth or sixth aspect;

wherein the transmitting device includes a transmitter for transmitting, to the radio base station, a signal output by the frequency modulator, and

wherein the receiving device receives a signal having the third frequency from the radio base station.

With this arrangement, the costs can be reduced, and reliability of the quality of communication performed with the radio base station can be improved.

According to a ninth aspect of the invention, a base station, which performs radio communication with a terminal device and performs communication with a toll center via a transmission line, comprises:

a signal transmission apparatus according to the fifth or seventh aspect; and
a communication unit, for performing radio communication with the terminal device,
wherein the receiving device receives, from the toll center, a signal obtained by frequency conversion, and transmits, through the communication unit to the terminal device, a signal output by the frequency converter, and
wherein the transmitting device receives a signal having the third frequency from the terminal device via the communication unit, and transmits, to the toll center, a signal output by the frequency converter.

With this arrangement, the costs can be reduced, and the reliability of the quality of communication performed with the toll center can be improved.

According to a tenth aspect of the invention, a signal transmission method comprises the steps of:

receiving a signal having a first frequency;
converting the signal having the first frequency into a signal having a second frequency by employing a reference signal having a predetermined frequency;
performing frequency division for the reference signal at a predetermined frequency division ratio;
synthesizing the signal having the second frequency with the reference signal obtained by the frequency division; and
performing frequency modulation for the synthesized signal.

According to this method, the reference signal used for frequency conversion is divided, the obtained signal is synthesized with a signal obtained by frequency conversion, and frequency modulation is performed for the synthesized signal. Thus, the elements of the reference signal can be transmitted to the reception side, so that the costs can be reduced, and the reliability of the communication quality can be improved.

According to an eleventh aspect of the invention, a signal transmission method comprises the steps of:

receiving a signal obtained through a process wherein a signal having a second frequency, into which a signal having a first frequency has been converted by employing a reference signal having a predetermined frequency, is synthesized with a signal that is obtained by multiplying the reference signal at a predetermined frequency division ratio, and thereafter, frequency modulation is performed for the synthesized signal;
performing frequency demodulation for the received signal;
separating the demodulated signal into the signal having the second frequency and the signal obtained by frequency division;
multiplying, by a multiple that is a reciprocal of the frequency division ratio, the signal obtained by frequency division; and
employing the signal obtained by multiplication to convert the signal having the second frequency into the signal having the first frequency.

According to this method, since the reference signal for frequency conversion that is included in the received signal is employed to perform frequency modulation for the demodulated signal, the reliability of the communication quality can be improved. Furthermore, since reference signal generation means is not required, the costs can be reduced.

<Advantage Of The Invention>

According to this invention, the transmitting device and the receiving device at low costs that can improve the reliability of the communication quality, the signal transmission apparatus and the signal transmission method therefor can be provided.

Brief Description of the Drawings

Fig. 1 is a schematic diagram showing the configuration of a signal transmission system according to a first embodiment of the present invention;
Figs. 2A to 2E are diagrams for explaining signal conversion performed by a transmitting device according to the first embodiment;

Fig. 3 is a schematic diagram showing the configuration of a signal transmission system according to a second embodiment of the present invention;

Fig. 4 is a graph showing the input voltage-output frequency characteristic of an FM modulator;

Fig. 5 is a graph showing the input frequency-output voltage characteristic of an FM demodulator;

Figs. 6A and 6B are diagrams showing a group delay characteristic for the whole interval from the FM modulator to the FM demodulator;

Fig. 7 is a schematic diagram showing the configuration of a signal transmission system according to a third embodiment of the present invention; and

Fig. 8 is a schematic diagram showing the configuration of a signal transmission system according to a fourth embodiment of the present invention.

<Description Of The Reference Numerals And Signs>

| 1a, 1b, 41a, 41b: | transmitting device |
| 2, 42a, 42b: | receiving device |
| 3a, 3a, 3b: | optical fiber |
| 4a, 4b: | toll center |
| 5a, 5b: | radio base station |
| 6: | mobile terminal |
| 10: | input terminal |
| 11, 411: | local oscillator |
| 12, 412: | frequency converter |
| 13, 413: | frequency demultiplier |
| 14, 15, 414, 415: | amplifier |
| 16, 416: | frequency multiplexer |
| 17, 417: | frequency modulator |
| 18, 418: | electric/optical converter |
| 19, 419: | automatic gain controller |
| 20: | output terminal |
| 21, 421: | optical/electric converter |
| 22, 422: | frequency demodulator |
| 23, 423: | frequency separator |
| 24, 25, 424, 425: | amplifier |
| 26, 426: | frequency converter |
| 27, 427: | multiplier |
| 43: | interface |
| 53: | common device |
| 54: | antenna |

<Best Modes for Carrying Out the Invention>

(First Embodiment)

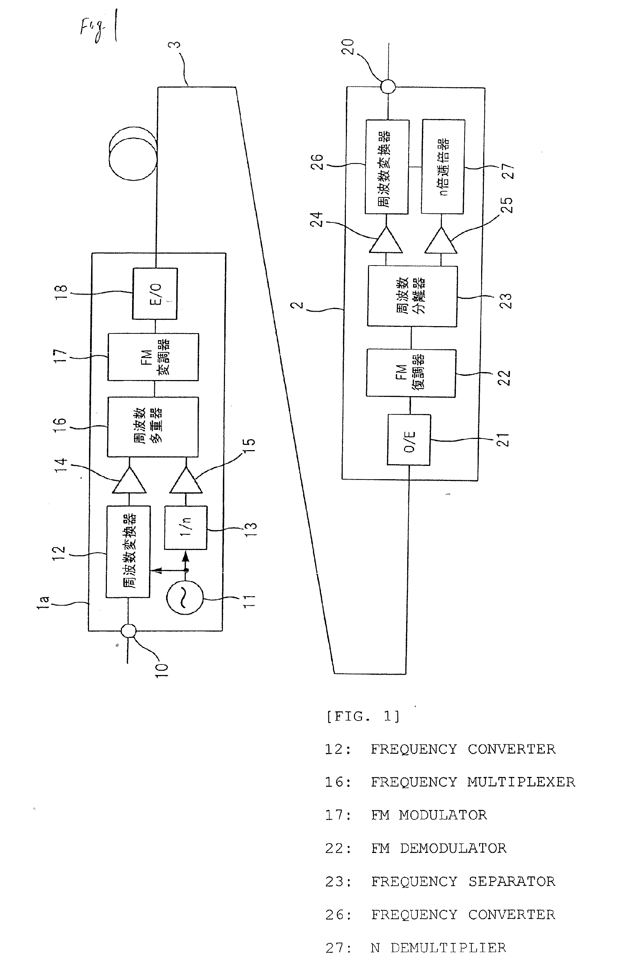

Fig. 1 is a schematic diagram showing the configuration of a signal transmission system according to a first embodiment of the present invention. As shown in Fig. 1, the signal transmission system for the first embodiment comprises: a transmitting device 1a and a receiving device 2 that is connected to the transmitting device 1a via an optical fiber 3.

The transmitting device 1a includes an input terminal 10, a local oscillator 11, a frequency converter 12, a frequency demultiplier 13, amplifiers 14 and 15, a frequency multiplexer 16, a frequency modulator (hereinafter referred to as an FM modulator) 17, and an electric/optical converter (hereinafter referred to as an E/O converter) 18.

A signal transmitted to the transmitting device 1a is accepted at the input terminal 10. In this embodiment, an explanation will be given for the case wherein a radio frequency signal (hereafter referred to as an RF signal) having a frequency f1 is transmitted as an input signal. The local oscillator 11 serves as reference signal generation means that generates a local signal having a frequency f0. It should be noted that the local signal is, for example, an unmodulated sine wave.

The frequency converter 12 serves as frequency conversion means that employs, as a reference, a local signal output by the local oscillator 11 to convert the RF signal input at the input terminal 10 into an intermediate frequency signal (hereinafter referred to as an IF signal) having the center frequency of (f1 - f0). The amplifier 14 amplifies the IF signal output by the frequency converter 12, and outputs the resultant signal to the frequency multiplexer 16.

The frequency demultiplier 13 serves as frequency division means that multiplies a local signal output by the local oscillator 11 at a frequency division ratio 1/n, and outputs a second local signal having a frequency (f0/n). The amplifier 15 amplifies the second local signal, and outputs the resultant signal to the frequency multiplexer 16.

The frequency multiplexer 16 serves as synthesization means that multiplexes the IF signal obtained by the amplifier 14 with the second local signal obtained by the amplifier 15. The FM modulator 17 serves as frequency modulation meas that collectively performs frequency modulation for the signal multiplexed by the frequency multiplexer 16. The E/O converter 18 converts a signal output by the FM modulator 17 into an optical signal where the intensity element of light has been modulated, and transmits the optical signal to the optical fiber 3.

The receiving device 2 includes an output terminal 20, an optical/electric converter (hereinafter referred to as an O/E converter) 21, a frequency demodulator (hereinafter referred to as FM demodulator) 22, a frequency separator 23, amplifiers 24 and 25, a frequency converter 26 and a multiplier 27.

The O/E converter 21 converts the optical signal received via the optical fiber 3 into an electric signal. The frequency demodulator 22 serves as frequency demodulation means that collectively performs frequency demodulation for an electric signal output by the O/E converter 21. As a result, an IF signal and a second local signal are output by the frequency demodulator 22.

The frequency separator 23 serves as separation means that outputs separately the IF signal having the center frequency (f1 - f0) and the second local signal having the frequency (f0/n), which have been received from the FM demodulator 22.

The amplifier 24 amplifies the IF signal received from the frequency separator 23, and outputs the resultant signal to the frequency converter 26. The amplifier 25 amplifies the second local signal output by the frequency separator 23, and outputs the resultant signal to the multiplier 27.

The multiplier 27 serves as multiplication means that multiplies, by n times, the second local signal obtained by the amplifier 25. The multiple n is a reciprocal of the frequency division ratio (1/n) employed by the frequency demultiplier 13 of the transmitting device 1a. As a result, a signal having the frequency f0, i.e., the first local signal is output by the multiplier 27.

The frequency converter 26 employs the first local signal (frequency: f0) output by the multiplier 27 to convert the frequency of the IF signal (center frequency: f1 - f0) obtained by the amplifier 24, and outputs a signal having the center frequency f1, i.e., the RF signal. The RF signal obtained by the frequency conversion is output via the output terminal 20.

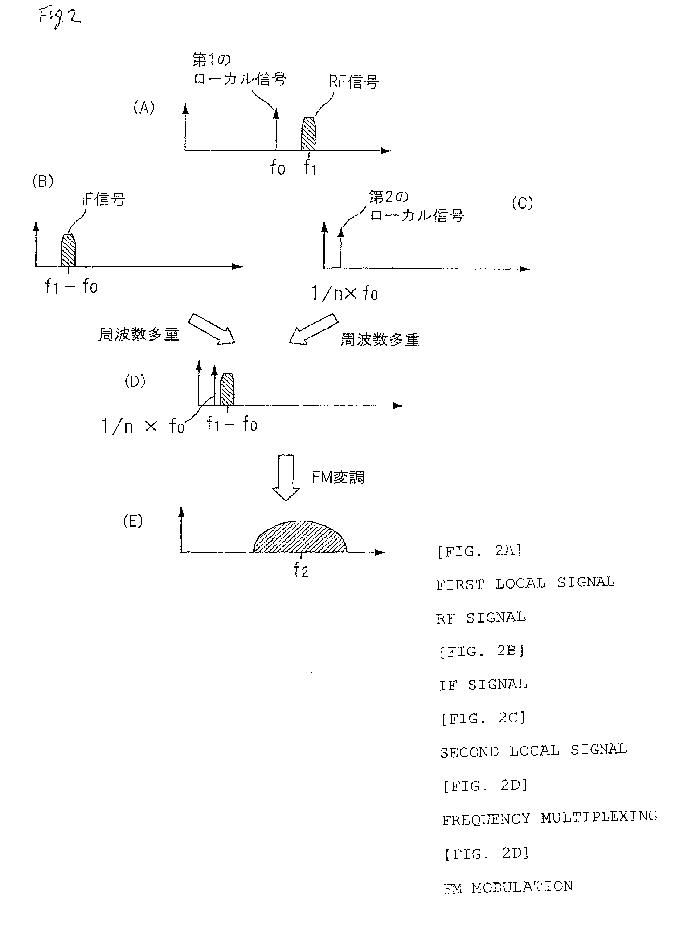

Figs. 2A to 2E are diagrams for explaining the signal conversion processing performed by the transmitting device 1a in the first embodiment. As shown in Fig. 2A, first, a local signal having the frequency f0 and the RF signal having the center frequency f1 are present, and as shown in Fig. 2B, the frequency of the RF signal is converted with the local signal being as a reference, so that an IF signal having the center frequency (f1 - f0) is generated. Further, as shown in Fig. 2C, the second local signal having the frequency (fO/n) is generated by dividing the frequency of the local signal.

The frequencies of the IF signal and the second local signal in Figs. 2B and 2C are multiplexed (Fig. 2D), and FM modulation is collectively performed for the obtained signal to generate a signal having the center frequency f2 shown in Fig. 2E.

The operation of the receiving device 2 is performed in the reverse order of that of the transmitting device 1a, i.e., signal conversion is performed in order from Fig. 2E to Fig. 2A.

An explanation will now be given for the FM modulation exponent used for frequency modulation performed by the transmitting device 1a. Assuming that fmax denotes the highest frequency of a signal before modulation, and $\Delta f$ denotes a bandwidth occupied by a signal modulated by the FM modulator 17, FM modulation exponent mFM is represented by expression (1).

$$mFM = \Delta f/fmax \qquad . \ . \ . \ (1)$$

As the FM modulation exponent mFM is increased, a large FM gain that is the noise tolerance characteristic is obtained by FM modulation. For the transmitting device 1a in this embodiment, denominator fmax is the highest frequency for the IF signal and the second local signal. Therefore, when the frequency division ratio 1/n is designated so that the frequency of the second local signal is lower than the highest frequency of the IF signal, the FM modulation exponent mFM is not changed, compared with when frequency modulation is performed only for the IF signal. Therefore, the reference signal obtained after frequency division can be synthesized with the second frequency, without affecting the noise tolerance characteristic.

According to the first embodiment, since the transmitting device performs frequency multiplexing for the IF signal and the second local signal used for frequency conversion, and thereafter performs FM modulation for the resultant signal, the elements of a reference signal can be transmitted to the receiving device. Further, since the receiving device employs the reference signal that is included in the received signal and is used for signal conversion, and performs frequency conversion for a demodulated signal, a local oscillator is not required for the reception side, and the costs can be reduced. Further, deterioration of a communication quality that is caused by shifting of local signals between the transmission side and the reception side can be prevented, and the reliability can be improved.

In this embodiment, an RF signal to be transmitted has been employed as one signal having a specific bandwidth. However, the RF signal may be a signal obtained by multiplexing a plurality of carrier signals. Furthermore, an optical fiber has been employed as a transmission line. However, a transmission medium is not especially limited, so long as one part of the transmission line is, a medium, such as a coaxial cable, where a band occupied by a FM modulated signal is obtained.

(Second Embodiment)

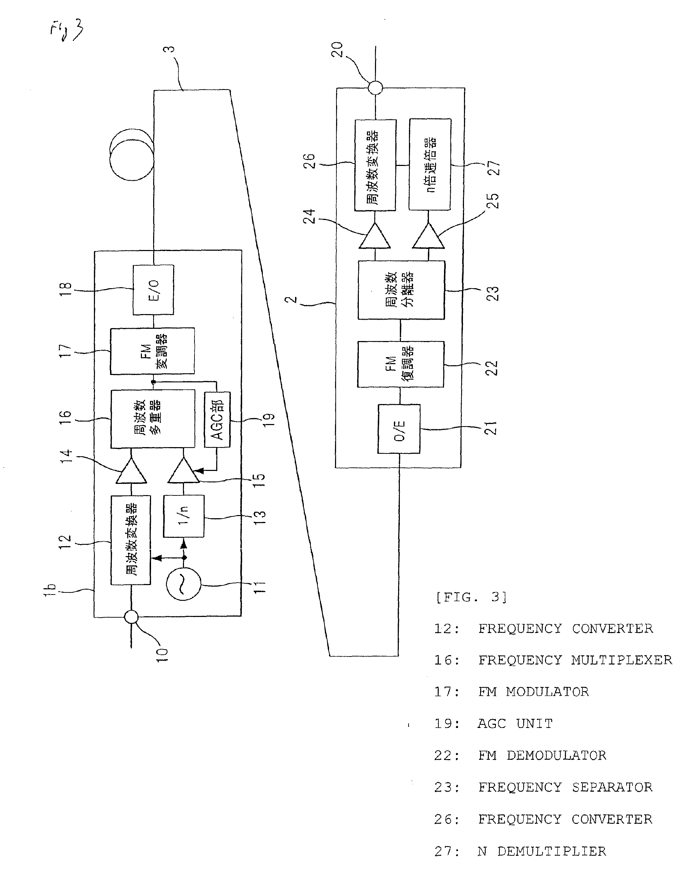

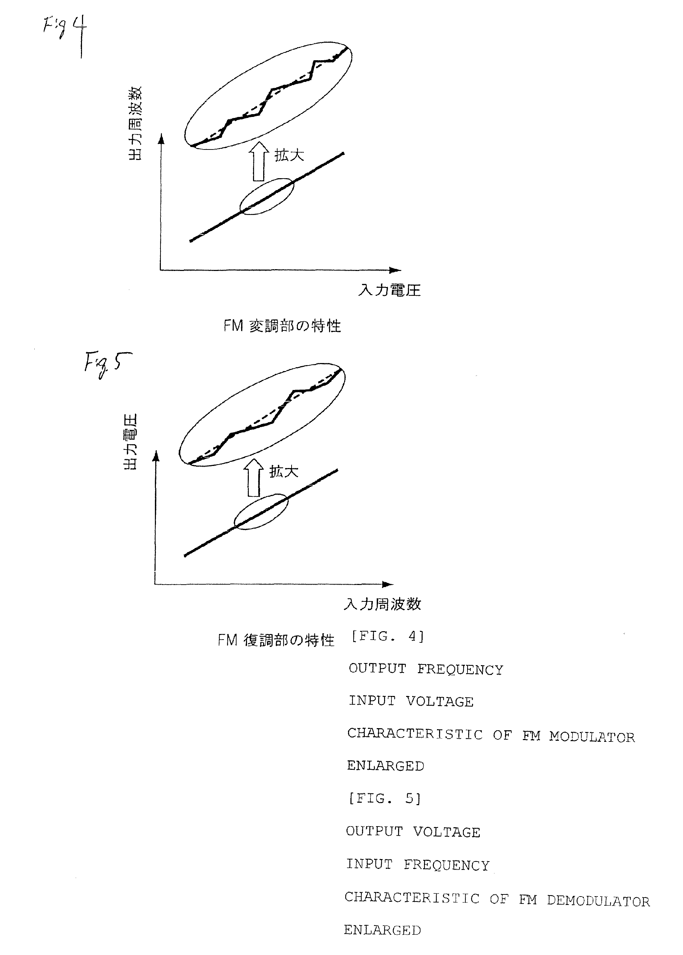

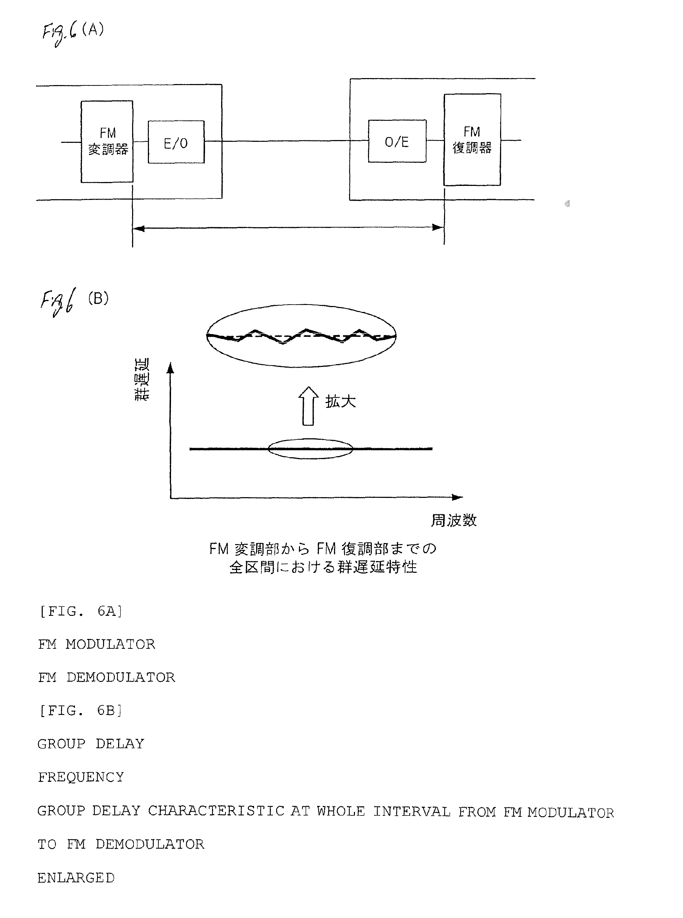

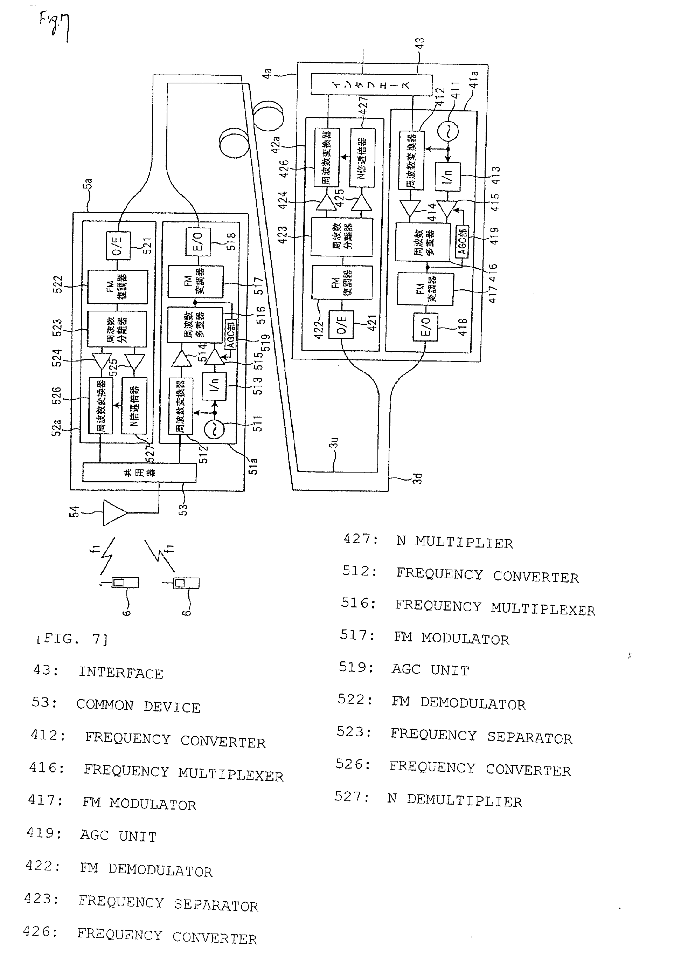

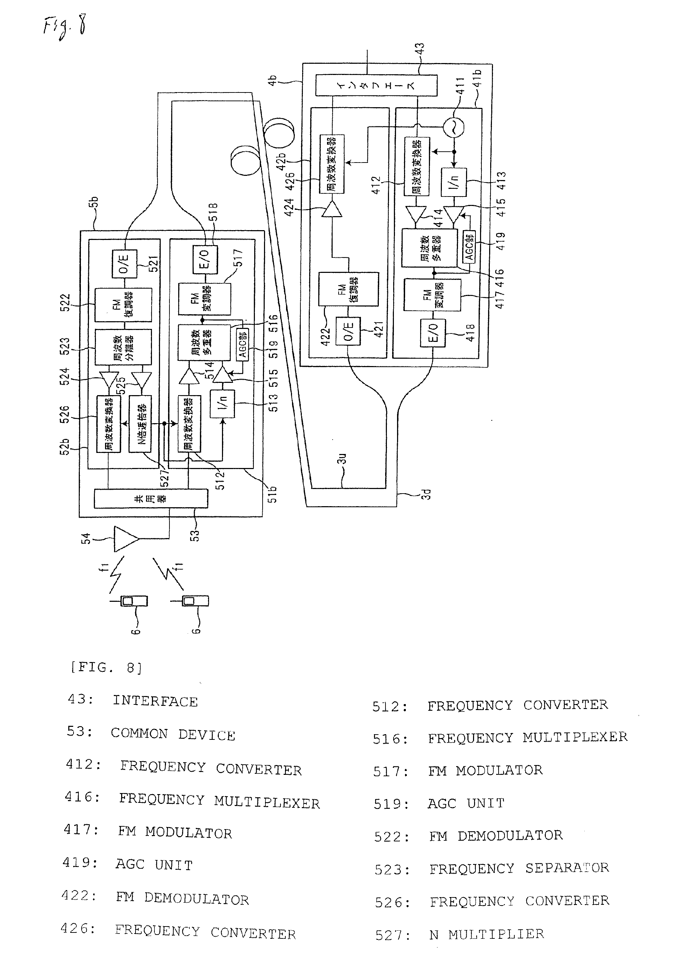

Fig. 3 is a schematic diagram showing the configuration of a signal transmission system according to a second embodiment of the present invention. In Fig. 3, the same reference numerals are employed to denote components corresponding to those in Fig. 1 for the first embodiment.

As shown in Fig. 3, a transmitting device 1b for this embodiment includes an automatic gain controller (hereinafter referred to as an AGC unit) 19. The AGC unit 19 monitors a signal output by a frequency multiplexer 16, and outputs a control signal to control the gain of an amplifier 15 in accordance with the power level of that signal. The amplifier 15 is a variable gain amplifier, the gain of which is changed in accordance with the control signal.

The characteristics of an FM modulator 17 and an FM demodulator 22 will now be explained. Fig. 4 is a graph showing the input voltage-output frequency characteristic of the FM modulator. Ideally, the characteristic of the output frequency relative to the input voltage should maintain linearity. However, actually, as shown in Fig. 4, ripple elements that represent a shift from the ideal line are present locally.

Fig. 5 is a graph showing the input frequency-output voltage characteristic of the FM demodulator. As shown in Fig. 5, the actual characteristic line of the output voltage relative to the input frequency is also shifted from the ideal characteristic linear line, and ripple elements are present.

Figs. 6A and 6B are diagrams showing a group delay characteristic at the entire interval between the FM modulator and the FM demodulator. Further, as the group delay characteristic, it is ideal that, at the entire interval (see Fig. 6A) between the FM modulator 17 and the FM demodulator 22, delay time is uniform in the frequency band occupied by the FM modulated signal. However, as shown in Fig 6B, actually, ripple elements that is local fluctuation elements are included.

When ripple elements that depend on the frequency are present as the voltage-frequency conversion characteristics shown in Figs. 4 to 6 and as the group delay characteristic, the affect of the ripple elements is comparatively increased as the amplitude of a signal input to the FM modulator is reduced. Thus, the distortion characteristic and noise characteristic for the FM demodulated signal would be deteriorated.

Therefore, when the level of the RF signal to be transmitted, i. e., a signal transmitted to the transmitting device is lowered, the AGC unit 19 adjusts the gain of the amplifier 15, so that the level of the second local signal is raised, and the power level of a signal that is output by the frequency multiplexer 16 to the FM modulator 17.

According to the second embodiment, deterioration of the distortion characteristic and the noise characteristic of the IF signal demodulated by the reception side can be prevented, and the RF signal obtained by frequency conversion can be transmitted while the quality is maintained.

In this embodiment, one RF signal having a specific bandwidth has been employed. However, the RF signal may be a signal obtained by multiplexing a plurality of carrier signals. Further, fluctuation of the power level of the signal includes losing of part of multiple carrier signals, or lowering of the level of one carrier signal.

(Third Embodiment)

Fig. 7 is a schematic diagram showing the configuration of a signal transmission system according to a third embodiment of the present invention. In this embodiment, as an example signal transmission system, an explanation will be given for a mobile communication system that comprises a terminal device, a radio base station, which can perform radio communication with the terminal device, and a toll center, which performs communication with the terminal device via the radio base station.

As shown in Fig. 7, the signal transmission system in this embodiment includes: a toll center 4a and a radio base station 5a, which is connected to the toll center 4a via optical fibers 3d and 3u. The optical fiber 3d is a transmission line for downstream signals, and the optical fiber 3u is a transmission line for upstream signals.

The toll center 4a includes: a transmitting device 41a, for transmitting a signal to the radio base station 5a; a receiving device 42a, for receiving a signal from the base station 5a; and an interface 43, which is connected to the transmitting device 41a and 42a to perform communication with, for example, a radio network controller (not shown) that is a higher device.

The transmitting device 41a includes a local oscillator 411, a frequency converter 412, a frequency demultiplier 413, amplifiers 414 and 415, a frequency multiplexer 416, an FM modulator 417, an E/O converter 418 and an AGC unit 419. The receiving device 42a includes an O/E converter 421, an FM demodulator 422, a frequency separator 423, amplifiers 424 and 425, a frequency converter 426 and a multiplier 427.

Since the transmitting device 41a and the receiving device 42a have the same configurations as those of the transmitting device 1b and the receiving device 2 as explained in the second embodiment, a detailed explanation for them will be given.

The radio base station 5a includes: a transmitting device 51a, for transmitting a signal to the toll center 4a; a receiving device 52a, for receiving a signal from the toll center 4a; a common device 53, for connecting the transmitting device 51a and the receiving device 52a to an antenna 54; and the antenna 54 used to exchange signals with a mobile terminal 6.

Since the transmitting device 51a and the receiving device 52a have the same configurations as those of the transmitting device 1b and the receiving device 2 explained in the second embodiment, a detailed explanation for them will be given.

In this embodiment, at least one of the transmitting devices 41a and 51a may have the same configuration as the transmitting device 1a explained in the first embodiment.

The operation of the signal transmission system for this embodiment will now be described. The toll center 4a receives, via the interface 43, a downstream RF signal (center frequency of f1) for the mobile terminal 6. The RF signal is transmitted to the frequency converter 412. Alocal signal having a frequency f0 is also transmitted to the frequency converter 412, and the RF signal is converted into an IF signal having the center frequency (f1 - f0).

The local signal is transmitted to the frequency demultiplier 413 and is converted into a second local signal having a frequency f0/n. The second local signal and the IF signal are transmitted to the frequency multiplexer 416, and are synthesized together. The signal obtained by the frequency multiplexer 416 is transmitted to the FM modulator 417. The FM modulator 417 performs FM modulation for the received signal, and transmits the resultant signal to the E/O converter 418. The E/O converter 418 converts the FM modulated signal into the intensity elements of light, and transmits the obtained optical signal to the optical fiber 3d.

In the radio base station 5a, the O/E converter 521 receives the optical signal, and converts it into an electric signal. The electric signal is transmitted to the FM demodulator 522. The FM demodulator 522 performs FM demodulation for the electric signal to obtain, as a demodulated signal, a signal where the IF signal and the second local signal are synthesized.

The signal obtained by the FM demodulator 522 is transmitted to the frequency separator 523, and is separated into the IF signal and the second local signal. The second local signal is transmitted to the multiplier 527 to reproduce a local signal having the frequency f0. The IF signal and the local signal having the frequency f0 are transmitted to the frequency converter 526, and the IF signal is converted into the RF signal having the center frequency f1. The RF signal, which is the output of the frequency converter 526, is transmitted to the common device 53, and is output to the mobile terminal 6 via the antenna 54 through radio communication.

An RF signal (center frequency f2) transmitted from the mobile terminal 6 is received at the antenna 54. The signal from the antenna 54 is transmitted via the common device 53 to the frequency converter 512.

The local oscillator 511 outputs a third local signal having a frequency f3. The third local signal is transmitted to the frequency converter 512, and is converted into an IF signal having the center frequency (f2 - f3). Further, the third local signal is transmitted to the frequency demultiplier 513, and is converted into a fourth local signal having a frequency of f3/n.

The IF signal having the center frequency (f2 - f3) and the fourth local signal are transmitted to the frequency multiplexer 516 and are synthesized together. The synthesis signal is transmitted to the FM modulator 517. The FM modulator 517 collectively performs the synthesis signal, and transmits the resultant signal to the E/O converter 518 . The E/O converter 518 converts the FM modulated signal into the intensity elements of light, and transmits the obtained optical signal to the optical fiber 3u.

In the toll center 4a, the optical signal transmitted via the optical fiber 3u is received by the O/E converter 421, and is converted into an electric signal. The electric signal is transmitted to the FM demodulator 422. The FM demodulator 422 outputs a demodulated signal where the IF signal and the fourth local signal are synthesized.

This synthesis signal is transmitted to the frequency separator 423, and is separated into the IF signal and the fourth local signal. The fourth local signal is transmitted to the multiplier 427. Since f3/n is the frequency of the fourth local signal, a fifth local signal having the frequency f3 is output by the multiplier 427 that has a multiplier of n times. The IF signal having the center frequency (f2 - f3) is output from the frequency separator 423 to the frequency converter 426. Since the fifth local signal is also transmitted to the frequency converter 426, the frequency of the IF signal is converted, and the RF signal having the center frequency f2 is obtained.

The RF signal output by the frequency converter 426 is transmitted to the radio network controller (not shown) via the interface 43.

According to the third embodiment, reliability of the quality of communication performed between the toll center and the radio base station can be improved, and the costs can be reduced.

(Fourth Embodiment)

Fig. 8 is a schematic diagram showing the configuration of a signal transmission system according to a fourth embodiment of the present invention. In Fig. 8, the same reference numerals are employed to denote components corresponding to those explained for the third embodiment. As shown in Fig. 8, in this embodiment, a toll center 4b, which includes a transmitting device 41b and a receiving device 42b, is connected via optical fibers 3u and 3d to a radio base station 5b, which includes a transmitting device 51b and a receiving device 52b.

The transmitting device 51b of the radio station 5b employs a local signal output by a multiplier 527 of the receiving device 52b, instead of a local signal output by a local oscillator 511. That is, a signal output by the multiplier 527 of the receiving device 52b is transmitted to a frequency converter 512 and a frequency demultiplier 513. And based on a local signal output by the multiplier 527, the frequency converter 512 converts an RF signal received via a common device 53. Further, the frequency demultiplier 513 multiplies, at a frequency division ratio 1/n, a local signal output by the multiplier 527.

According to this arrangement, since a local signal generator is not required for the radio base station 5b, the size of the apparatus and the costs can be reduced.

When the above described configuration is employed for the radio base station 5b, a local signal used for upstream transmission to the toll center 4b is a signal obtained in such a manner that the multiplier 427 has reproduced a local signal that is included in a downstream signal received from the toll center 4b. That is, the frequency of a local signal used for upstream transmission is equal to the frequency oscillated by the local oscillator 411 of the toll center 4b.

Thus, the toll center 4b may be provided as shown in Fig. 8. That is, instead of the frequency separator 423, the amplifier 425 and the multiplier 427 of the receiving device 42b to reproduce a local signal that is included in a received upstream signal, the frequency converter 426 may convert the frequency of the demodulated signal by employing a local signal received from the local oscillator 411 provided for the transmitting device 41b.

According to this arrangement, since a configuration for reproducing a local signal is not required for the receiving device 42b of the toll center 4b, the size of the apparatus and the costs can be reduced.

The present invention has been explained in detail by referring to the specific embodiments. However, it is obvious for one having ordinary skill in the art that the present invention can be variously modified or altered without departing from the spirit and scope of the invention.

The present invention is based on Japanese Patent Application No. 2004-197793, filed on July 5, 2004, and the contents of the application are included as a reference.

Industrial Applicability

The present invention provides improvement of reliability of a communication quality at low costs, and is useful for a transmitting device and a receiving device, a signal transmission apparatus and a signal transmission method.

**Claims**

**1.** A transmitting device comprising:

a reference signal generator, for outputting a reference signal having a predetermined frequency;
a frequency converter, for employing the reference signal to convert a signal having a first frequency into a signal having a second frequency;
a frequency demultiplier, for multiplying the reference signal at a predetermined frequency division ratio;
a synthesizer, for synthesizing the signal having the second frequency with the reference signal obtained by the frequency demultiplier; and
a frequencymodulator, for performing frequencymodulation for the synthesis signal.

**2.** The transmitting device according to claim 1, further comprising:

an automatic gain controller, for performing automatic gain control for a signal output by the frequency demultiplier, so that a power level of a signal output by the synthesizer is constant.

**3.** The transmitting device according to claim 1 or 2, wherein the frequency division ratio is designated so that the frequency of a signal output by the frequency demultiplier is lower than the second frequency.

**4.** A receiving device comprising:

a receiver, for receiving a signal obtained through a process wherein a signal having a second frequency, into which a signal having a first frequency has been converted by employing a reference signal having a predetermined frequency, is synthesized with a signal that is obtained by multiplying the reference signal at a predetermined frequency division ratio, and frequency modulation is per formed for the synthesized signal;
a frequency demodulator, for performing frequency demodulation for the received signal;
a separator, for separating the demodulated signal into a signal having the second frequency and a signal obtained by frequency division;
a multiplier, for multiplying, by a multiple that is a reciprocal of the frequency division ratio, the signal obtained by frequency division; and
a frequency converter for converting the signal having the second frequency into the signal having the first frequency by employing the signal obtained by multiplication.

**5.** A signal transmission apparatus comprising:

a transmitting device including

a reference signal generator, for outputting a first reference signal,
a frequency converter, for employing the first reference signal to convert a signal having a first frequency into a signal having a second frequency,
a frequency demultiplier, for multiplying the first reference signal at a predetermined frequency division ratio,
a synthesizer, for synthesizing the signal having the second frequency with the first reference signal obtained by frequency division, and
a frequency modulator, for performing frequency modulation for the synthesis signal; and

a receiving device including

a receiver, for receiving a signal obtained through a process wherein a signal having a fourth frequency, into which a signal having a third frequency has been converted by employing a second reference signal, is synthesized with a signal that is obtained by multiplying the second reference signal at a predetermined frequency division ratio, and thereafter, frequency modulation is performed for the synthesized signal,
a frequency demodulator, for performing frequency demodulation for the received signal;
a separator, for separating the demodulated signal into the signal having the fourth frequency and the signal obtained by frequency division;
a multiplier, for multiplying, by a multiple that is a reciprocal of the frequency division ratio, the signal obtained by frequency division, and
a frequency converter, for employing the signal obtained by multiplication to convert the signal having the fourth frequency into the signal having the third frequency.

**6.** A signal transmission apparatus comprising:

a transmitting device including

a reference signal generator, for outputting a first reference signal,
a frequency converter, for employing the first reference signal to convert a signal having a first frequency into a signal having a second frequency,
a frequency demultiplier, for multiplying the first reference signal at a predetermined frequency division ratio,
a synthesizer, for synthesizing the signal having the second frequency with the first reference signal obtained by frequency division, and

a frequency modulator, for performing frequency modulation for the synthesis signal; and

a receiving device including

a receiver, for receiving a signal having a fourth frequency, into which a signal having a third frequency has been converted by employing the first reference signal;
a frequency demodulator, for performing frequency demodulation for the received signal;
a frequency converter, for employing a signal output by the first reference signal generation means of the transmitting device to convert the signal having the fourth frequency into the signal having the third frequency.

7. A signal transmission apparatus comprising:

a receiving device including

a receiver, for receiving a signal obtained through a process wherein a signal having a fourth frequency, into which a signal having a third frequency has been converted by employing a first reference signal having a predetermined frequency, is synthesized with a signal that is obtained by multiplying the first reference signal at a predetermined frequency division ratio, and thereafter, frequency modulation is performed for the synthesized signal,
a frequency demodulator, for performing frequency demodulation for the received signal,
a separator, for separating the demodulated signal into the signal having the fourth frequency and the signal obtained by frequency division,
a multiplier, for multiplying, by a multiple that is a reciprocal of the frequency division ratio, the signal obtained by frequency division, and
a frequency converter, for employing the signal obtained by multiplication to convert the signal having the fourth frequency into the signal having the third signal; and

a transmitting device including

a frequency converter for, based on the signal that is obtained by frequency division and is output by the separator of the receiving device, converting a signal having the first frequency into a signal having the second frequency by employing the signal that is multiplied by a multiple that is a reciprocal of the frequency division ratio, and
a frequency modulator, for performing frequency modulation for the signal having the second frequency.

8. A toll center, which performs communication with a terminal device via a radio base station that is capable of communicating with the terminal device, comprising:

a signal transmission apparatus according to claim 5 or 6,
wherein the transmitting device includes a transmitter for transmitting, to the radio base station, a signal output by the frequency modulator, and
wherein the receiving device receives a signal having the third frequency from the radio base station.

9. A base station, which performs radio communication with a terminal device and performs communication with a toll center via a transmission line, comprising:

a signal transmission apparatus according to claim 5 or 7; and
a communication unit, for performing radio communication with the terminal device,
wherein the receiving device receives, from the toll center, a signal obtained by frequency conversion, and transmits, through the communication unit to the terminal device, a signal output by the frequency converter, and
wherein the transmitting device receives a signal having the third frequency from the terminal device via the communication unit, and transmits, to the toll center, a signal output by the frequency converter.

10. A signal transmission method comprising the steps of:

receiving a signal having a first frequency;
converting the signal having the first frequency into a signal having a second frequency by employing a reference signal having a predetermined frequency;

performing frequency division for the reference signal at a predetermined frequency division ratio;

synthesizing the signal having the second frequency with the reference signal obtained by the frequency division; and

performing frequency modulation for the synthesized signal.

11. A signal transmission method comprising the steps of:

receiving a signal obtained through a process wherein a signal having a second frequency, into which a signal having a first frequency has been converted by employing a reference signal having a predetermined frequency, is synthesized with a signal that is obtained by multiplying the reference signal at a predetermined frequency division ratio, and thereafter, frequency modulation is performed for the synthesized signal;

performing frequency demodulation for the received signal;

separating the demodulated signal into the signal having the second frequency and the signal obtained by frequency division;

multiplying, by a multiple that is a reciprocal of the frequency division ratio, the signal obtained by frequency division; and

employing the signal obtained by multiplication to convert the signal having the second frequency into the signal having the first frequency.

Fig. 1

[FIG. 1]

12: FREQUENCY CONVERTER

16: FREQUENCY MULTIPLEXER

17: FM MODULATOR

22: FM DEMODULATOR

23: FREQUENCY SEPARATOR

26: FREQUENCY CONVERTER

27: N DEMULTIPLIER

Fig.2

(A) 第1の ローカル信号　RF信号

$f_0$　$f_1$

(B) IF信号

$f_1 - f_0$

(C) 第2の ローカル信号

$1/n \times f_0$

周波数多重　周波数多重

(D)

$1/n \times f_0$　$f_1 - f_0$

FM変調

(E)

$f_2$

[FIG. 2A]

FIRST LOCAL SIGNAL

RF SIGNAL

[FIG. 2B]

IF SIGNAL

[FIG. 2C]

SECOND LOCAL SIGNAL

[FIG. 2D]

FREQUENCY MULTIPLEXING

[FIG. 2D]

FM MODULATION

Fig 3

[FIG. 3]

12: FREQUENCY CONVERTER

16: FREQUENCY MULTIPLEXER

17: FM MODULATOR

19: AGC UNIT

22: FM DEMODULATOR

23: FREQUENCY SEPARATOR

26: FREQUENCY CONVERTER

27: N DEMULTIPLIER

Fig 4

出力周波数

拡大

入力電圧

FM 変調部の特性

Fig 5

出力電圧

拡大

入力周波数

FM 復調部の特性　[FIG. 4]

OUTPUT FREQUENCY

INPUT VOLTAGE

CHARACTERISTIC OF FM MODULATOR

ENLARGED

[FIG. 5]

OUTPUT VOLTAGE

INPUT FREQUENCY

CHARACTERISTIC OF FM DEMODULATOR

ENLARGED

Fig.6 (A)

Fig.6 (B)

群遅延

拡大

周波数

FM 変調部から FM 復調部までの
全区間における群遅延特性

[FIG. 6A]

FM MODULATOR

FM DEMODULATOR

[FIG. 6B]

GROUP DELAY

FREQUENCY

GROUP DELAY CHARACTERISTIC AT WHOLE INTERVAL FROM FM MODULATOR

TO FM DEMODULATOR

ENLARGED

Fig.7

[FIG. 7]

43: INTERFACE

53: COMMON DEVICE

412: FREQUENCY CONVERTER

416: FREQUENCY MULTIPLEXER

417: FM MODULATOR

419: AGC UNIT

422: FM DEMODULATOR

423: FREQUENCY SEPARATOR

426: FREQUENCY CONVERTER

427: N MULTIPLIER

512: FREQUENCY CONVERTER

516: FREQUENCY MULTIPLEXER

517: FM MODULATOR

519: AGC UNIT

522: FM DEMODULATOR

523: FREQUENCY SEPARATOR

526: FREQUENCY CONVERTER

527: N DEMULTIPLIER

*Fig. 8*

[FIG. 8]

43:   INTERFACE

53:   COMMON DEVICE

412:   FREQUENCY CONVERTER

416:   FREQUENCY MULTIPLEXER

417:   FM MODULATOR

419:   AGC UNIT

422:   FM DEMODULATOR

426:   FREQUENCY CONVERTER

512:   FREQUENCY CONVERTER

516:   FREQUENCY MULTIPLEXER

517:   FM MODULATOR

519:   AGC UNIT

522:   FM DEMODULATOR

523:   FREQUENCY SEPARATOR

526:   FREQUENCY CONVERTER

527:   N MULTIPLIER

| INTERNATIONAL SEARCH REPORT | International application No. |
| --- | --- |
| | PCT/JP2005/004547 |

A. CLASSIFICATION OF SUBJECT MATTER
Int.Cl⁷ H04B10/04, 10/06, 10/142, 10/152, H04J14/00, 14/02, H04Q7/36

According to International Patent Classification (IPC) or to both national classification and IPC

B. FIELDS SEARCHED

Minimum documentation searched (classification system followed by classification symbols)
Int.Cl⁷ H04B10/00-10/28, H04J14/00-14/08, H04Q7/36

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2001-144668 A (Hitachi Kokusai Electric Inc.), 25 May, 2001 (25.05.01), Claim 1; Fig. 1 (Family: none) | 1-11 |
| A | JP 6-164427 A (Fujitsu Ltd.), 10 June, 1994 (10.06.94), Claim 1; Figs. 1, 2, 8 (Family: none) | 1-11 |
| A | JP 5-30020 A (Nippon Telegraph And Telephone Corp.), 05 February, 1993 (05.02.93), Claim 1; Fig. 2 (Family: none) | 1-11 |

☐ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 14 June, 2005 (14.06.05) | 28 June, 2005 (28.06.05) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5030020 A
- JP 2004197793 A